## Europäisches Patentamt
## European Patent Office
## Office européen des brevets

(19)

(11) Veröffentlichungsnummer : **0 424 410 B1**

(12) **EUROPÄISCHE PATENTSCHRIFT**

(45) Veröffentlichungstag der Patentschrift :
30.09.92 Patentblatt 92/40

(51) Int. Cl.⁵ : **G06F 7/52, G06F 11/08**

(21) Anmeldenummer : **89907096.5**

(22) Anmeldetag : **06.07.89**

(86) Internationale Anmeldenummer :
**PCT/DE89/00445**

(87) Internationale Veröffentlichungsnummer :
**WO 90/00773 25.01.90 Gazette 90/03**

(54) **MULTIPLIZIERER.**

(30) Priorität : **13.07.88 DE 3823722**

(43) Veröffentlichungstag der Anmeldung :
**02.05.91 Patentblatt 91/18**

(45) Bekanntmachung des Hinweises auf die
Patenterteilung :
**30.09.92 Patentblatt 92/40**

(84) Benannte Vertragsstaaten :
**AT BE CH DE FR GB IT LI NL SE**

(56) Entgegenhaltungen :
EP-A- 0 109 137
EP-A- 0 113 391
US-A- 4 752 905
PROCEEDINGS OF THE INSTITUTION OF
ELECTRICAL ENGINEERS, BAND 115, NR. 11,
NOVEMBER 1968 K.J. DEAN ET AL.: "DESIGN
FOR A FULLMULTIPLIER", SEITEN 1592-1594,
SIEHE FIGUREN 1,2; SEITE 1592, SPALTE 1,
ZEILE 10 - SPALTE 2, ZEILE 5
IEEE JOURNAL OF SOLID STATE CIRCUITS,
BAND SC-21, NR. 5, OKTOBER 1986 IEEE
(NEW YORK, NY, US) D. ZURAS ET AL.:
"BALANCEDDELAY TREES AND COMBINA-
TORIAL DIVISION IN VLSI", SEITEN 814-819,
SIEHE FIGUREN 9,10; ABSATZ III

(73) Patentinhaber : SIEMENS
AKTIENGESELLSCHAFT
Wittelsbacherplatz 2
W-8000 München 2 (DE)

(72) Erfinder : VENZL, Gerd
Elisabethstrasse 7
W-8000 München 40 (DE)
Erfinder : MITCHELL, Rebecca
Laan van Ouderzorg 124
NL-2352 HZ Leiderdorp (NL)
Erfinder : NERZ, Ulrich
Mönchbergstrasse 27
W-8000 München 82 (DE)
Erfinder : SOUKUP, Holger
Franz-Wolter-Strasse 62
W-8000 München 81 (DE)
Erfinder : ROTH, Wolfram
Sedlmayrstrasse 16
W-8000 München 19 (DE)
Erfinder : BECKER, Bernd
Am Gegenortschacht 26
W-6602 Dudweiler (DE)

Jouve, 18, rue Saint-Denis, 75001 PARIS

EP 0 424 410 B1

## Beschreibung

Multiplizierer

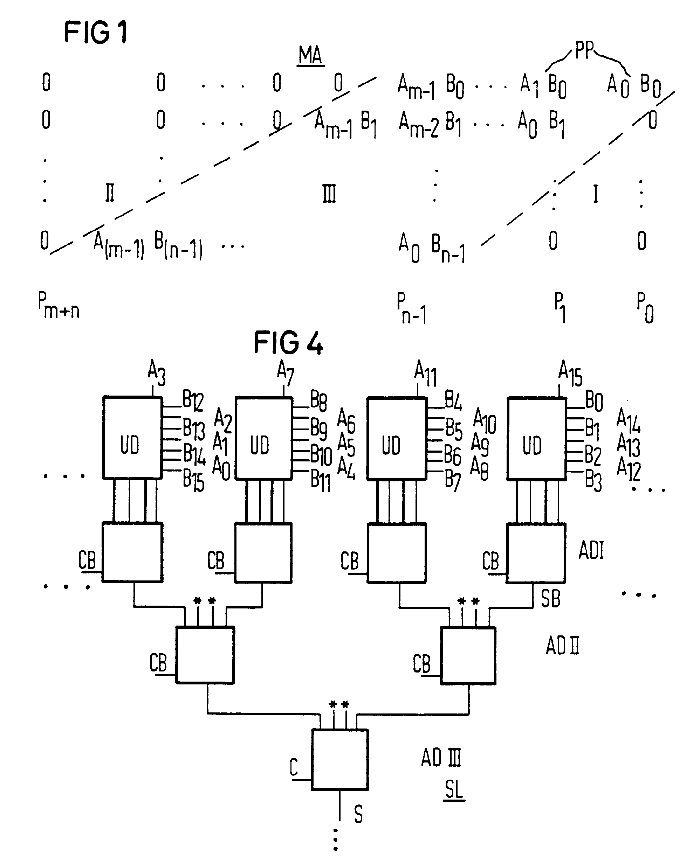

Die Multiplikation von x-stelligen Multiplikanden (x=0, 1,2..m-1) mit einem y-stelligen Multiplikator (y=0, 1,2 ..n-1) (m und n sind ganze positive Zahlen), die als Binärzahlen dargestellt sind, kann gemäß Fig. 1 durchgeführt werden. Dort ist eine Matrix MA dargestellt, die die bei der Multiplikation auftretenden Partialprodukte PP enthält. Der Multiplikand ist dabei mit A, der Multiplikator mit B bezeichnet. Die Partialprodukte können mit UND-Schaltungen aus der Multiplikator- und Multiplikandenstelle erzeugt werden. Eine Produktstelle P wird durch Aufsummierung der Partialprodukte pro Spalte der Matrix erzeugt. Dabei ist noch ein Übertrag von der nächst niederwertigeren Stelle des Produktes mit zu berücksichtigen. In Fig. 1 können drei Felder unterschieden werden. Im Feld III sind die Partialprodukte aufgeführt, die für die Multiplikation notwendig sind. Im Feld I sind Partialprodukte aufgeführt, die bei der Multiplikation nicht notwendig sind, dasselbe gilt für das Feld II. Die Stellen der Matrix sind in diesen Feldern I und II mit O angegeben.

Um einen Multiplizierer aufzubauen, der entsprechend der Matrix nach Fig. 1 multipliziert, sind somit UND-Schaltungen erforderlich, die die Partialprodukte bilden, und Addierschaltungen, die die Partialprodukte pro Spalte aufsummieren.

Derartige Multiplizierer sind bereits bekannt. Aus der EP-A-0113 391 ist ein digitaler Multiplizierer entnehmbar, der pro Produkstelle eine Spalte von Schaltungen aufweist, in denen die Partialprodukte dieser Produktstelle mit Hilfe von Addierschaltungen aufaddiert werden, wobei Überträge von nächst niederwertigeren Produktstellen berücksichtigt werden. Die Addierschaltungen sind so ausgeführt, daß die Carrybits möglichst schnell berechnet werden können.

Aus Proceedings of the Institution of Electrical Engineers, Band 115, Nr. 11, Nov. 1968, Seiten 1592 - 1594 ist ein Vollmultiplizierer bekannt, der einzelne Zellen aufweist, mit denen die Partialprodukte gebildet werden und aufaddiert werden. Dabei sind auch Einzelzellen vorgesehen, die zur Produktbildung nicht notwendig sind.

In IEEE Journal of Solid State Circuits, Band SC-21, Nr. 5, Oktober 1986, Seiten 814 bis 819 ist ein weiterer Multiplizierer beschrieben, bei dem pro Produktstelle Volladdierer verwendet werden.

Um solche Multiplizierer auf einen Chip mit möglichst wenig Raumbedarf und möglichst günstigen Laufzeitverhältnissen zu realisieren, ist es erforderlich, daß die UND-Schaltungen und Addierschaltungen in besonders vorteilhafter Weise angeordnet sind. Weiterhin ist es erforderlich, daß ein solcher Multiplizierer sehr leicht getestet werden kann.

Die der Erfindung zugrundeliegende Aufgabe besteht darin, einen Multiplizierer anzugeben, der so aufgebaut ist, daß er die oben angegebenen Anforderungen erfüllt. Zunächst soll der Aufbau so sein, daß ein Multiplizierer variabler Multiplikanden-und Multiplikatorwortbreite leicht hergestellt werden kann.

Der Multiplizierer zur Verknüpfung eines m-stelligen Multiplikanden und eines n-stelligen Multiplikators, die beide als Dualzahlen dargestellt sind, umfaßt zur Lösung der Aufgabe

a) m+n nebeneinander angeordnete Zellen, jeweils eine pro Produktstelle, von denen jede Zelle jeweils UND-Schaltungen zur Bildung der der Produktstelle zugeordneten Partialprodukte und Addierschaltungen zur Aufsummierung der Partialprodukte für diese Produktstelle enthält,

b) folgenden Zusammenhang der UND-Schaltungen und Addierschaltungen innerhalb einer Zelle:
  – jede UND-Schaltung besteht aus mindestens zwei UND-Gliedern, von denen jedes ein Bit des Multiplikanden und ein Bit des Mulitplikators zu einem Partialprodukt verknüpft,
  – eine Addierschaltung erster Stufe verknüpft jeweils die von einer UND-Schaltung erzeugten Partialprodukte zu einer Partialsumme und einem Partialübertrag,
  – Addierschaltungen zweiter Stufe verknüpfen jeweils mindestens zwei Partialsummen der ersten Stufe derselben Produktstelle und mindestens zwei Partialüberträge der ersten Stufe der nächst niederwertigern Produktstelle zu einer weiteren Partialsumme und einem weiteren Partialübertrag,
  – Addierschaltungen dritter Stufe verknüpfen jeweils mindestens zwei Partialsummen der zweiten Stufe derselben Produktstelle und mindestens zwei Partialüberträge der zweiten Stufe der nächst niederwertigeren Produktstelle zu einer weiteren Partialsumme und einem weiteren Partialübertrag,
  – der Verknüpfungsvorgang wird mit Hilfe der baumartig eingesetzten Addierschaltungen der einzelnen Stufen solange wiederholt, bis die Anzahl der in einer Stufe derselben Produktstelle erzeugten Partialsummen und der Partialüberträge von der nächst niederwertigeren Produktstelle so ist, daß sie mit einer finalen Addierschaltung zu einem finalen Summenbit und einem finalen Übertragsbit verknüpfbar sind,
  – das finale Summenbit einer Produktstelle und das finale Übertragsbit der vorhergehenden Produktstelle werden in einer Addierschaltung zu einem Wert P der entsprechenden Produktstelle verknüpft und

c) folgende Anordnung der UND-Schaltungen und Addierschaltungen innerhalb einer Zelle:
- einer ersten UND-Schaltung folgt eine Addierschaltung erster Stufe,
- diese Addierschaltung erster Stufe folgt eine zweite UND-Schaltung, an die sich eine Addierschaltung erster Stufe für die Ausgangssignale dieser UND-Schaltung anschließt,
- an die Addierschaltung erster Stufe schließt eine Addierschaltung zweiter Stufe für die vorhergehenden Addierschaltungen erster Stufe an,
- diese Aufeianderfolge wiederholt sich bis zwei Addierschaltungen zweiter Stufe aufgetreten sind, dann folgt auf die letzte Addierschaltung zweiter Stufe eine Addierschaltung dritter Stufe, die die Ausgangssignale der Addierschaltungen zweiter Stufe verknüpft,
- diese Aufeinanderfolge wird entsprechend den vorhergehenden Schritten fortgesetzt bis die finale Addierschaltung aufgetreten ist.

Es ist besonders günstig, für die Realisierung auf einem Halbleiterbaustein und für die Testbarkeit des Bausteins, wenn der Multiplizierer regelmäßig aufgebaut ist. Deshalb sollen alle Zellen des Multiplizierers eine gleiche Anzahl von UND-Schaltungen und eine gleiche Anzahl von Addierschaltungen aufweisen. Das heißt, auch für die im Feld I und Feld II liegenden Partialprodukte wird eine UND-Schaltung vorgesehen, die dann das Partialprodukt Null erzeugt. Dazu kann der Multiplikandeneingang der UND-Schaltungen auf Null gesetzt werden. Dies gilt für den Fall, daß der Multiplikand und Multiplikator ohne Vorzeichen sind.

Sollen dagegen Binärzahlen mit Vorzeichen multipliziert werden, dann ist es vorteilhaft, die Zweierkomplementdarstellung dieser Binärzahlen zu wählen. In diesem Falle wird ein Eingang der UND-Schaltungen, die die im Feld II liegenden Produkte erzeugen, mit dem most significant bit (MSB) des Multiplikanden, das das Vorzeichen enthält, verbunden. Weiterhin werden den UND-Schaltungen, die das most significant bit des Multiplikators mit Multiplikandenstellen verknüpfen, diese Multiplikandenstellen invertiert zugeführt. Schließlich muß noch in der n-l-ten Produktstelle das most significant bit des Multiplikators hinzuaddiert werden.

Die Anordnung der UND-Schaltungen und der Addierschaltungen in einer Zelle wird zweckmäßigerweise so gewählt, daß die Verbindungsleitungen möglichst kurz sind. Es ist dabei zweckmäßig, daß jede UND-Schaltung aus vier UND-Gliedern besteht, von denen jedes ein Multiplikandenbit mit einem Multiplikatorbit verknüpft. Eine solche UND-Schaltung wird gefolgt in der Zelle von einer Addierschaltung erster Stufe. Darauf folgt eine zweite UND-Schaltung, die wiederum von einer Addierschaltung erster Stufe gefolgt wird. Die Addierschaltungen erster Stufe verknüpfen die Partialprodukte der UND-Schaltungen. Auf die Addierschaltung erster Stufe erfolgt dann eine Addierschaltung zweiter Stufe, die die Ergebnisse der beiden vorgehenden Addierstufen erster Stufe aufsummiert. Die weiteren Einheiten der Zelle folgen in entsprechender Anordnung aufeinander, d.h. eine weitere Addierschaltung der nächst höheren Stufe wird dann eingesetzt, wenn die Ergebnisse von zwei Addierschaltungen von niederwertiaeren Stufen aufzusummieren sind.

Für den Testbetrieb ist es vorteilhaft, daß die Anzahl der Multiplikandenbits verdoppelt wird und die dadurch zusätzlich entstehenden Partialprodukte (Feld II) gebildet werden aus dem MSB des Multiplikanden und den Multiplikatorbits, daß weiterhin die Anzahl der Multiplikatorbits immer auf eine durch vier dividierbare Zahl erweitert wird, wobei das höchstwertige Bit der Erweiterung im Betriebsfall O, im Testfall einstellbar ist, die niederwertigeren Bit der Erweiterung im Betriebsfall gleich dem MSE des Multiplikators, im Testfall individuell einstellbar sind. Auf diese Weise ist es möglich, alle UND-Schaltungen individuell zu testen.

Andere Weiterbildungen der Erfindung ergeben sich aus den Unteransprüchen.

Der erfindungsgemäße Multiplizierer zeichnet sich durch hohe Verarbeitungsgeschwindigkeit, die nur logarithmisch von der Multiplikatorwortbreite abhängt, aus. Er ist mit einer geringen Zahl von Testmustern vollständig testbar. Der Multiplizierer ist in der Multiplikatorwortbreite z.B. in Schritten von 4 bit realisierbar, in der Multiplikandenwortbreite in Schritten von 1 bit. Das Layout ist sehr regulär und kann von einem Programm erstellt werden. Der Multiplizierer kann sowohl positive Dualzahlen als auch Dualzahlen in Zweierkomplementdarstellung multiplizieren. Der reguläre Aufbau des Multiplizierers aus gleich aufgebauten Zellen pro Produktstelle erleichtert auch die Erzeugung von Multiplizierern, die Multiplikanden und Multiplikatoren verschiedener Wortbreite verknüpfen.

Anhand von Ausführungsbeispielen, die in den Figuren dargestellt sind, wird die Erfindung weiter erläutert. Es zeigen

FIG 1 eine Partialproduktmatrix,
FIG 2 eine entsprechende Matrix für die Multiplikation im Zweierkomplement,
FIG 3 eine Matrix für die Multiplikation im Zweierkomplement, bei der Multiplikator und Multiplikand aus Testzwecken erweitert worden sind,
FIG 4 ein Schaltbild, das pro Produktstelle die Verknüpfung von UND-Schaltungen und Addierschaltungen zeigt,
FIG 5 in schematischer Darstellung die Anordnung der Zellen bei der Multiplikation von positiven Zahlen,
FIG 6 die Anordnung der Zellen bei der Multiplikation in Zweierkomplementdarstellung,

FIG 7 die Aufeinanderfolge von UND-Schaltungen und Addierschaltungen innerhalb der Zellen,

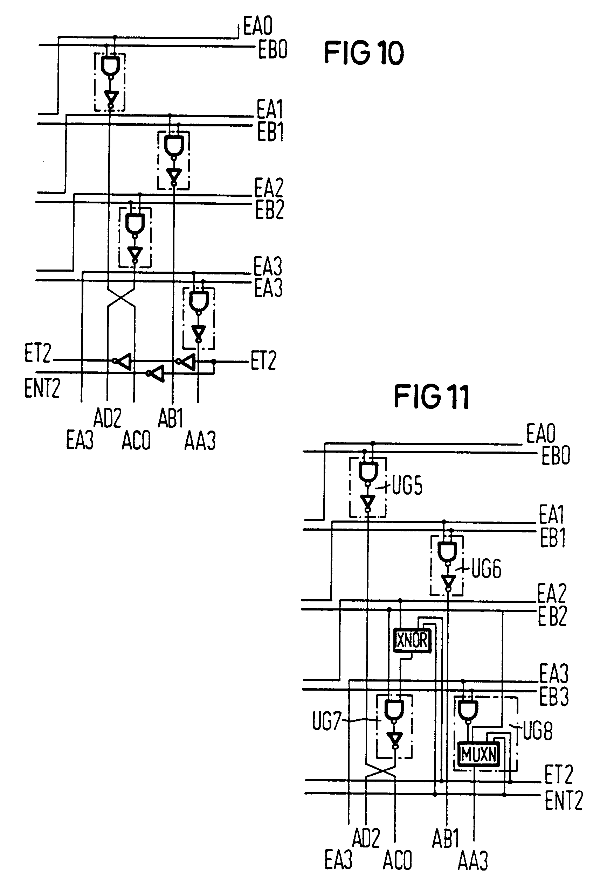

FIG 8 bis FIG 12 UND-Schaltungen, die zur Verknüpfung der Partialprodukte verwendet werden,

FIG 13 die Ausführung eines verwendeten Multiplexers,

FIG 14 die Ausführung einer xnor-Schaltung,

FIG 15 die Ausführung der Addierschaltung,

FIG 16 eine schematische Darstellung, aus der sich ergibt, wie die Multiplikandenbits dem Multiplizierer zugeführt werden,

FIG 17 eine schematische Darstellung, aus der sich ergibt, wie die Multiplikatorbits für die UND-Schaltungen im Feld I zugeführt werden,

FIG 18 eine schematische Darstellung über die Zuführung der Multiplikatorbits,

FIG 19 ein Schaltbild, aus dem sich ergibt, wie die Übertragseingänge der Addierschaltungen der niederwertigsten Zelle im Testfall verbunden sind.

FIG 1 zeigt eine Matrix aus Partialprodukten, die bei der Multiplikation von positiven Zahlen entsteht. Die für die Produktbildung erforderlichen Partialprodukte sind dabei im Feld III angeordnet. Aus Regelmäßigkeitsgründen sind zusätzlich das Feld I und das Feld II gezeigt, in denen die Partialprodukte jeweils O sind. Diese Bereiche sind zur Bildung der Werte der Produktstellen P nicht erforderlich. Multipliziert werden in FIG 1 ein m-stelliger Multiplikand A mit einem n-stelligen Multiplikator B.

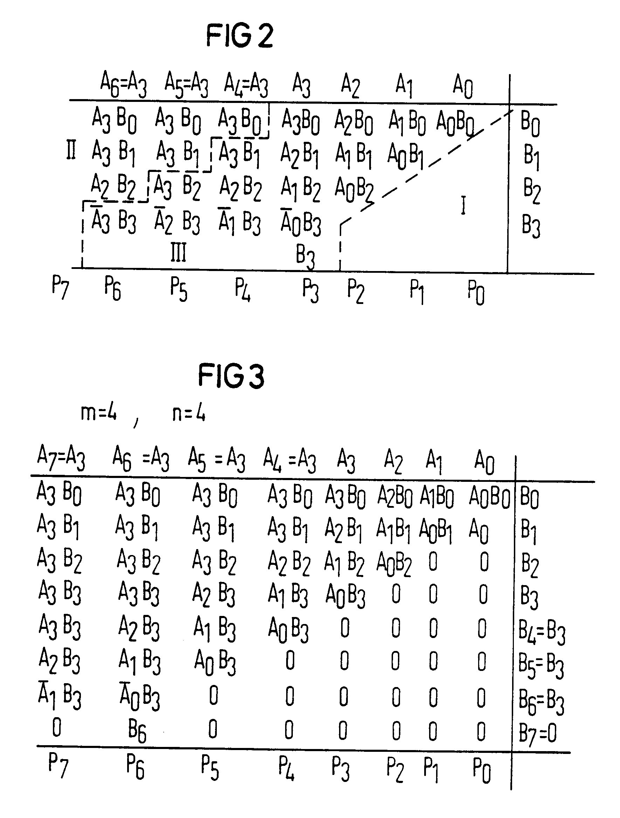

Soll eine Multiplikation mit Binärzahlen, die Vorzeichen enthalten, durchgeführt werden, dann ist es zweckmäßig, dafür die Zweierkomplementdarstellung zu verwenden. Eine der FIG 1 entsprechende Matrix zeigt FIG 2. Hier ist die Multiplikation des Multiplikanden $A_0$ bis $A_3$ mit dem Multiplikator $B_0$ bis $B_3$ aufgeführt. Gezeigt ist zunächst das Feld III, in dem die Partialprodukte aufgeführt sind, die für die multiplikation notwendig sind. Es fällt dabei auf, daß in der vorletzten Zeile der Matrix, in der das most significant bit $B_3$ des Multiplikators, das das Vorzeichen darstellt, mit dem entsprechenden Multiplikandenbits verknüpft wird, diese Multiplikandenbits invertiert verwendet werden. Zusätzlich muß noch wegen der Zweierkomplementdarstellung das most significant bit $B_3$ in der Produktstelle $P_3$ hinzuaddiert werden, in der das Verknüpfungsergebnis des niederwertigsten Multiplikandenbits $(LSB)A_0$ mit dem most significant bit $(MSB) B_3$ des Multiplikators erfolgt. Das Feld I in FIG 2 entspricht dem in FIG 1. Ist also mit Nullen gefüllt, während das Feld II in FIG 2 anders behandelt wird als in FIG 1. Hier stehen Partialprodukte, bei denen jeweils das most significant bit $A_3$ des Multiplikanden mit zugeordneten Stellen des Multiplikators $B_0$ bis $B_2$ verknüpft sind. Am unteren Rand der Matrix entstehen dann die Produktstellen $P_0$ bis $P_6$. Es kann noch eine weitere Produktstelle $P_7$ vorgesehen werden, für einen eventuellen Übertrag.

Aus Regularitätsgründen ist es sinnvoll, daß auch die in Feld I und Feld II liegenden Partialprodukte erzeugt werden. Man erhält dann jeweils den einzelnen Produktstellen P zugeordnete Partialprodukte, die in den Spalten der FIG 2 liegen. In jeder Spalte sind gleichviele Partialprodukte vorhanden, dementsprechend müssen gleichviele Schaltunaen zur Erzeugung der Partialprodukte pro Spalte vorgesehen werden.

In FIG 2 ist der Multiplikand A bereits erweitert worden, und zwar um drei Stellen. Für die Multiplikandenstellen $A_4$, $A_5$, $A_0$ wird jeweils das most significant bit $A_3$ des Multiplikanden herangezogen. Eine entsprechende Erweiterung des Multiplikators ist aus Prüfzwecken sinnvoll. Eine Matrix für einen solchen Fall ist in FIG 3 dargestellt. Die Erweiterung des Multiplikators erfolgt so, daß die Größe des erweiterten Multiplikators B durch 4 dividierbar ist. Bei einer Matrix entsprechend FIG 2 müßten dann vier Stellen hinzugefügt werden. Die erweiterten Multiplikatorbits $B_4$, $B_5$, $B_6$ werden dabei gleich dem most significant bit $B_3$ des Multiplikators gesetzt, das erweiterte Multiplikator-bit $B_7$ dagegen im Betriesbsfall auf O gesetzt. Diese Erweiterung hat im Betriebsfall keinen Einfluß, da der Multiplikator korrekt im Zweierkomplement dargestellt ist. Im Testbetrieb, der später erläutert wird, kann jedoch jedes erweiterte Multiplikatorbit $B_4$ bis $B_7$ individuell angesteuert werden und damit eine individuelle Überprüfung der einzelnen zur Bildung der Partialprodukte verwendeten Schaltungen durchgeführt werden.

Im folgenden wird erläutert, wie der Multiplizierer aufgebaut ist. Dabei wird in der Regel von der Matrix nach FIG 3 ausgegangen.

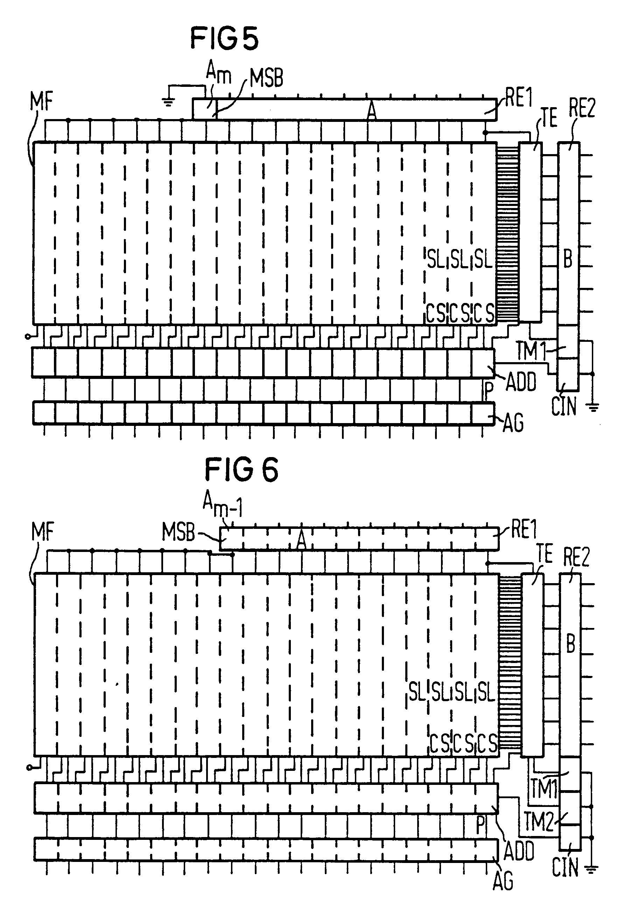

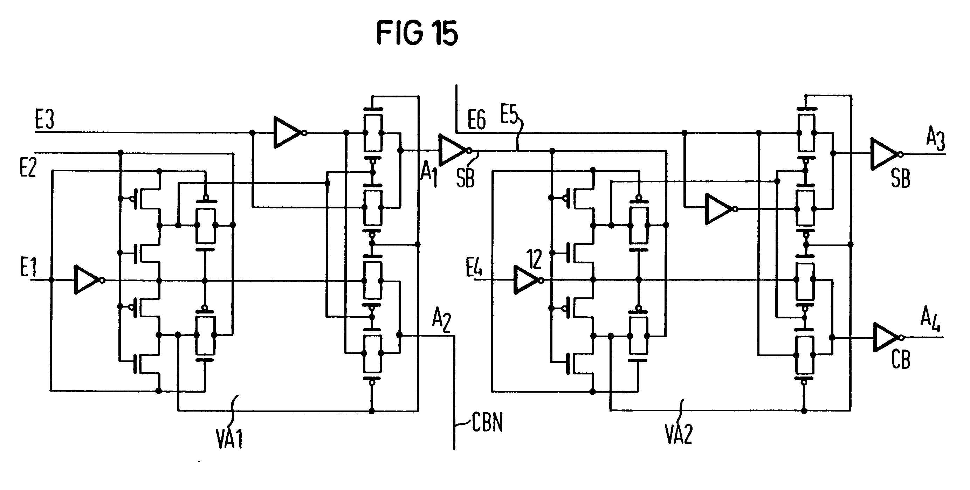

Aus FIG 4 kann das Prinzip einer Schaltung entnommen werden, mit der für eine Produktstelle P der Wert ermittelt wird. Das heißt, eine Schaltung gemäß FIG 4 ist einer Spalte der Matrix zugeordnet. Im Beispiel der FIG 4 wird ein Multiplikand und ein Multiplikator mit einer Wortbreite von 16 bit miteinander verknüpft. Die Erzeugung der Partialprodukte erfolgt mit Hilfe von UND-Schaltungen UD, wobei jede UND-Schaltung UD vier UND-Glieder enthält, von denen jedes UND-Glied jeweils ein Partialprodukt bildet. Dementsprechend gibt jede UND-Schaltung UD vier Partialprodukte am Ausgang ab, die in einer Addierschaltung jeweils aufsummiert werden. Die Addierschaltung AD muß somit so aufgebaut sein, daß sie vier Bit aufsummieren kann. Eine entsprechende Schaltung ergibt sich aus FIG 15. Das heißt, die Addierschaltung AD macht aus vier Eingangssignalen zwei Ausgangssignale, ein Summenbit SB und ein Übertragbit CB.

Jeder UND-Schaltung UD ist somit eine Addierschaltung zugeordnet, die Addierschaltungen der Stufe 1 genannt werden sollen. Diese Addierschaltungen werden mit ADI bezeichnet. Sind eine Mehrzahl von Addierschaltungen ADI vorhanden, so müssen deren Ausgangswerte, die Summenbit SB, weiter aufsummiert werden. Dies erfolgt mit Hilfe von Addieschaltungen der Stufe 2, die mit ADII bezeichnet sind. In FIG 4 ist noch eine weitere Addierschaltung, nämlich eine der Stufe 3 erforderlich, die mit ADIII bezeichnet ist, und an deren Ausgang dann die Werte S (Summenbit) und C (Carrybit) für die Produktstelle abgegeben werden. Die Addierschaltungen AD sind alle gleich aufgebaut, d.h. sie verknüpfen vier Eingangssignale zu zwei Ausgangssignalen, einem Summenbit und einem Übertragsbit. Die Überträge CB, die von den Addierschaltungen ADI und ADII dieser Produktstelle erzeugt werden, gehen zu Addierschaltungen der nächst höheren Produktstelle. Die Überträge, die zur Addition dieser Stelle erforderlich sind, werden von den Addierschaltungen der nächst niederen Produktstelle geliefert. Diese Überträge sind in FIG 4 mit Sternen bezeichnet.

Wie sich aus FIG 4 ergibt, entsteht zur Realisierung des Wertes einer Produktstelle eine baumartig angeordnete Schaltung, die jeweils von UND-Schaltungen UD ausgeht und sich mit Hilfe von Addierschaltungen AD immer weiter verengt, bis nur noch eine Addierschaltung der höchsten erforderlichen Stufe vorliegt.

Die Anzahl der Addierstufen ist abhängig von der Größe des Multiplikators und weiterhin davon, ob die Multiplikation zweier positiver Zahlen oder zweier Zahlen im Zweierkomplement durchzuführen ist. Für einen Multiplizierer, der nur positive Zahlen multipliziert, ist die Anzahl der Addierstufen gegeben durch den dualen Logarithmus $\log_2 n$ (n ist die Anzahl der bits des Multiplikators) aufgerundet auf die nächste ganze Zahl und dann um 1 verringert. Für einen Multiplizierer für Zweierkomplementzahlen entspricht die Anzahl der Addierstufen dem $\log_2 (n + 1)$, aufgerundet auf die nächste ganze Zahl und um 1 verringert.

Die Anordnung der einzelnen Zellen, die jeweils eine Schaltung entsprechend FIG 4 enthalten, auf einem Halbleiterbaustein zeigt im Prinzip FIG 5 für den Fall, daß vorzeichenlose Zahlen miteinander multipliziert werden. Einzelne Zellen SL liegen nebeneinander und bilden ein Multiplizierfeld MF. In den Zellen SL werden die Partialprodukte gebildet und pro Produktstelle aufaddiert. Das Ergebnis er- scheint als Summenbit S und Carrybit C am Ausgang jeder Zelle SL. Das Summenbit am Ausgang der Zelle SL muß noch mit dem Übertrag von der vorhergehenden Produktstelle verknüpft werden. Dies erfolgt in der Addierschaltung ADD, der der Wert S von den einzelnen Zellen und ein Übertrag C von einer vorhergehenden Zelle zugeführt wird. Am Ausgang der Addierschaltung ADD erscheint dann der richtige Wert P der entsprechenden Produktstelle. Dieser wird in ein Ausgangsregister AG eingespeichert. Der Multiplikand A wird in das Eingangsregister RE1 eingespeichert und von dort den Zellen SL zugeführt. Das dem Multiplikanden hinzugefügte most significant bit Am wird, wie es in FIG 3 dargestellt ist, den Zellen zugeführt, die die Partialprodukte des Feldes II erzeugen. Da diese im Fall der FIG 5 immer O sind, muß das most significant bit auf O gesetzt werden. Der Multiplikator B wird einem Eingangsregister RE 2 zugeführt und gelangt über eine zusätzliche, der Prüfung dienenden Schaltung TE zu den einzelnen Zellen SL des Multiplizierers. Das Register RE2 enthält noch Stellen für ein Prüfsignal TM1 und für einen Anfangsübertrag CIN.

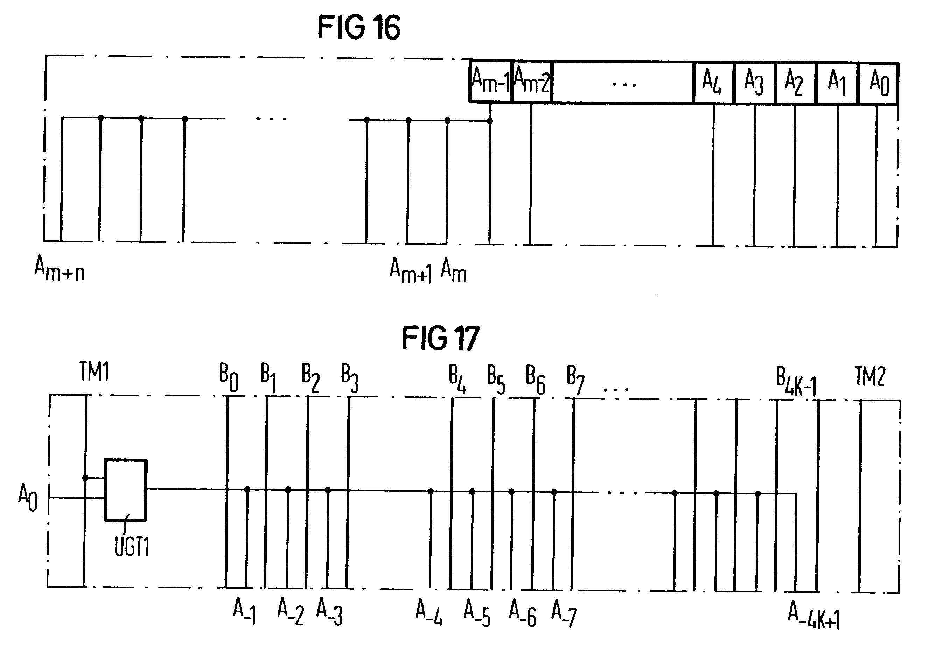

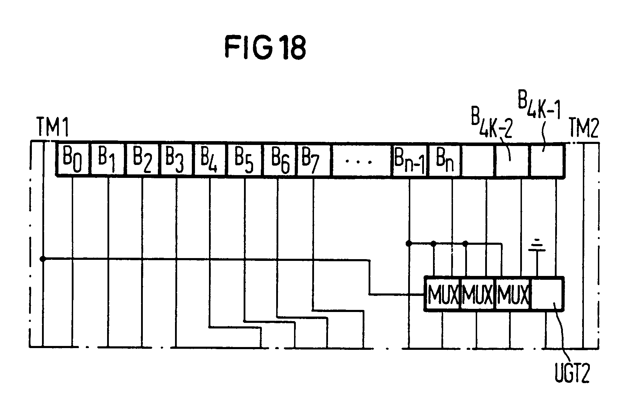

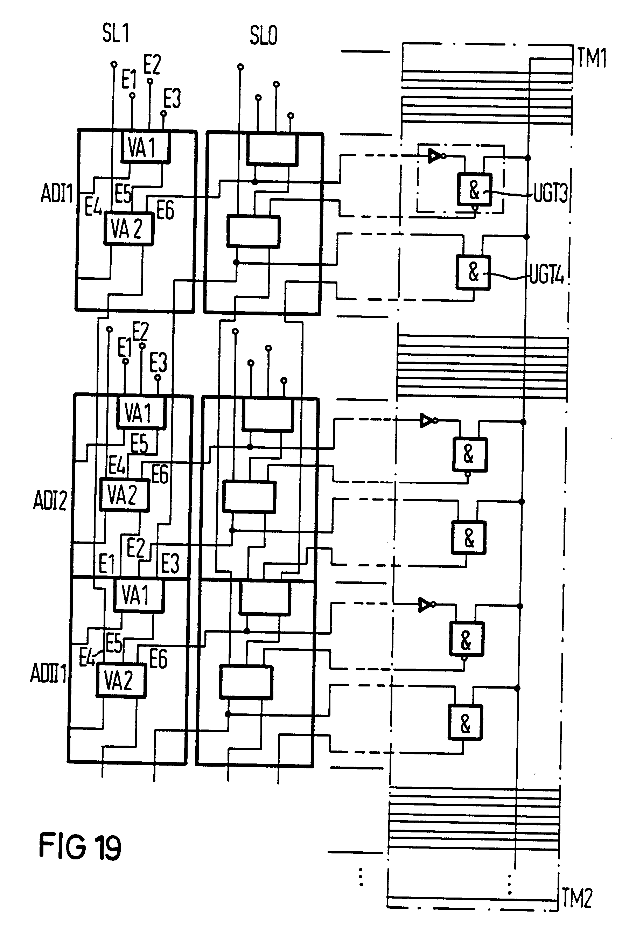

Der prinzipielle Aufbau eines Multiplizierers, der in Zweierkomplement dargestellte Einärzahlen multipliziert, zeigt FIG 6. Er unterscheidet sich von dem Multiplizierer der FIG 5 einmal dadurch, daß das most significant bit des Multiplikanden A, das das Vorzeichen darstellt, den Zellen SL zugeführt wird, die Partialprodukte im Feld II erzeugen müssen. Ein weiterer Unterschied besteht darin, daß das Register RE2 für den Multiplikator eine Stelle für ein zweites Prüfsignal TM2 vorsieht. Die Ausführung des Registers RE1 ist in FIG 16, die Ausführung des Registers RE2 in FIG 18 und die Ausführung der Prüfschaltung TE den FIG 17 und 19 entnehmbar.

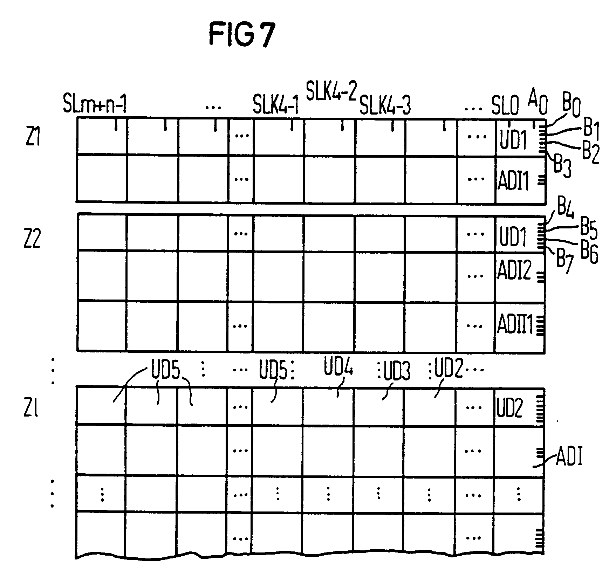

Die genauere Anordnung der UND-Schaltungen und Addierschaltungen, die in FIG 4 dargestellt sind, in der Zelle SL ergibt sich aus FIG 7. Die einzelnen Zellen SL des Multipliziererfeldes MF sind so auf dem Chip angeordnet, wie es FIG 7 entnehmbar ist. Es sei als Beispiel die Zelle SL0 erläutert, die die niederwertigste Produktstelle nach FIG 3 erzeugt. Von oben nach unten wird zunächst eine UND-Schaltung UD1 in der ersten Zeile Z1 angeordnet, gefolgt von einer Addierschaltung der ersten Stufe ADI1. Die UND-Schaltung UD1 wird mit vier Leitungen für vier Bit $B_0$ bis $B_3$ des Multiplikators und mit einem Bit $A_0$ des Multiplikanden versorgt. Wie FIG 3 zeigt, kann damit das für die Erzeugung der Produktstelle $P_0$ erforderliche Partialprodukt $A_0 B_0$ erzeugt werden. Die weiteren bei der UND-Schaltung UD1 in der Zelle SL0 angedeuteten Leitungen dienen zur Überprüfung des Multiplizierfeldes und erzeugen das Feld I. Die auf die UND-Schaltung UD1 folgende Addierschaltung ADI1 der ersten Stufe verknüpft die Partialprodukte der UND Schaltung UD1. Die am Rand angedeuteten Leitungen sind für die Prüfung des Multipliziererfeldes MF erforderlich. Sie ergeben sich aus FIG 19.

Auf die Addierschaltung ADI1 folgt eine UND-Schaltung UD1 zweiter Zeile Z2, die die Verknnüpfung der Multiplikandenbits mit den Multiplikatorbits $B_3$ bis $B_6$ durchführt. Sie entspricht im Aufbau der UND-Schaltung UD1 der ersten Zeile Z1. Auf die UND-Schaltung UD1 der zweiten Zeile Z2 folgt eine Addierschaltung ADI2 der ersten Stufe, die die Partialprodukte der UND-Schaltung UD1 verknüpft. Auf die Addierschaltung ADI2 folgt eine Addierschaltung der zweiten Stufe, die mit ADIII bezeichnet ist. Mit dieser Addierschaltung der zweiten Stufe werden die Ausgangssignale der beiden Addierschaltungen der ersten Stufe, nämlich ADI1 und ADI2, summiert.

Zwischen den Zeilen Z1 und Z2 kann ein Verdrahtungskanal vorgesehen werden, in dem die Leitungen, auf dem die Multiplikandenbit übertragen werden, jeweils um eine Zeile versetzt werden. Die Versetzung entspricht der Matrix, z.B. FIG 3.

An die Zeile Z2 können sich weitere Zeilen anschließen, die entsprechend aufgebaut sind. Sie bestehen immer aus einer Reihe von UND-Schaltungen UD1, die gefolgt ist durch mindestens eine Addierschaltung der ersten Stufe ADI

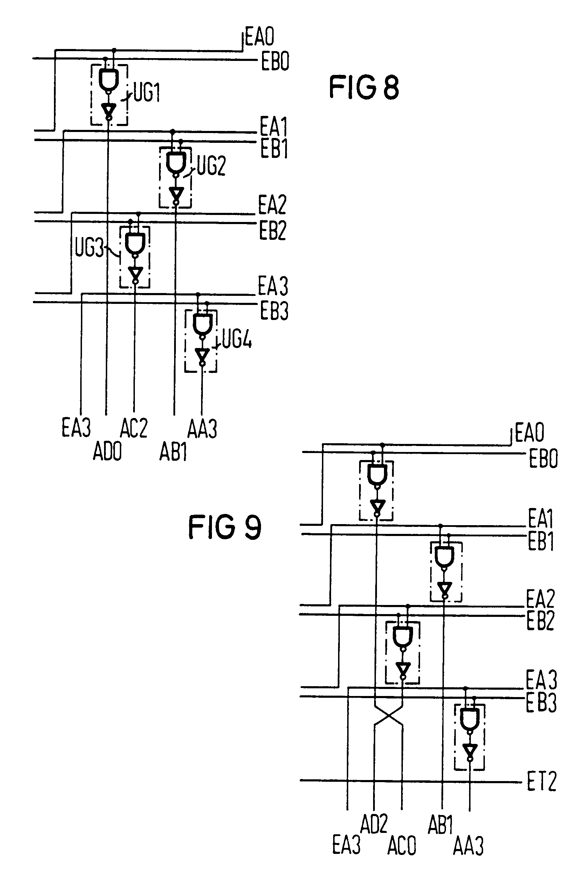

Der Aufbau der UND-Schaltungen UD1 kann der FIG 8 entnommen werden. Die UND-Schaltung besteht aus vier UND-Gliedern UG1 bis UG4, die hier als NAND-Glieder mit angeschlossenem Inverter realisiert sind. Dem ersten UND-Glied UG1 wird über den Anschluß EA0 das höchstwertigste Multiplikandenbit der hier zu verknüpfenden vier Multiplikandenbit zugeführt, über den Eingang EB0 das niederwertigste Multiplikatorbit der zu verknüpfenden multiplikatorbits. Dem zweiten UND-Glied UG2 wird über den Eingang EA1 das zweithöchstwertige Multiplikandenbit und über den Eingang EB1 das zweitniederwertigste Multiplikatorbit zugeführt usw. bis dem UND-Glied UG4 das niederwertigste Multiplikandenbit am Eingang EA3 und das höchstwertigste Multiplikatorbit am Eingang EB3 zugeführt wird. Aus FIG 8 ist auch zu ersehen, wie die Leitungen für die Multiplikandenbit versetzt zu der benachbarten Zelle geführt werden, während die Leitungen für die Multiplikatorbits durch die UND-Schaltung waagrecht hindurchgeführt sind.

Für die letzten vier zu verknüpfenden Multiplikatorbits, das sind die höchstwertigen Multiplikatorbits oder nach FIG 3 die Multiplikatorbits der letzten vier Zeilen der Matrix, ist nach FIG 7 eine Zeile $Z_1$ vorgesehen, die in der ersten Reihe UND-Schaltungen enthält und in den folgenden Zeilen Addierschaltungen verschiedener stufen. Die Anzahl der Addierstufen hängt entsprechend der obenangegebenen Formel von der Breite des zu verknüpfenden Multiplikators ab.

Die Ausführung der UND-Schaltungen in der Reihe der Zeile $Z_1$ ist unterschiedlich und hängt davon ab, welche Partialprodukte zu bilden sind. Ein Vergleich mit FIG 3 zeigt, daß in den letzten vier Zeilen der Matrix, die die Multiplikatorenbit $B_4$ bis $B_7$ erfaßt, etwas unterschiedliche UND-Schaltungen für die Partialproduktbildung notwendig sind. Dementsprechend gibt es unterschiedliche UND-Schaltungen. UND-Schaltungen UD2 werden verwendet von Zelle SL0 bis zur Zelle 4k-3 einschließlich, wobei k = (ndiv4)+1 ist (div ist die Integer-Division ohne Rest). Bezogen auf die Matrix der FIG 3 ist n = 4 und damit ergibt sich ein Wert von k von 2. Das heißt bis zur Zelle 5 wird eine UND-Schaltung UD2 verwendet. Dies kann auch leicht nach FIG 3 nachvollzogen werden. Der Aufbau dieser UND-Schaltung UD2 ergibt sich aus FIG 9. Es ist zu sehen, daß sich diese UND Schaltung UD2 von der UND-Schaltung UD1 kaum unterscheidet.Der wesentliche Unterschied ist darin zu sehen, daß eine Leitung für ein Prüfsignal ET2 durch die UND-Schaltung UD2 hindurchläuft. Die Aufgabe des Prüfsignals ET2 wird später erläutert.

Die nächste UND-Schaltung in der Reihe, nämlich die UND-Schaltung UD3, die im Beispiel der FIG 3 die sechste Zelle betrifft, ist ebenfalls fast identisch mit der UND-Schaltung UD2, sie unterscheidet sich nur dadurch, daß die Leitung für das Prüfsignal ET2 sich aufspaltet in zwei Leitungen, nämlich eine Leitung für die Weiterführung des Prüfsignals ET2 in invertierter Form ENT2 und nicht invertierter Form ET2.

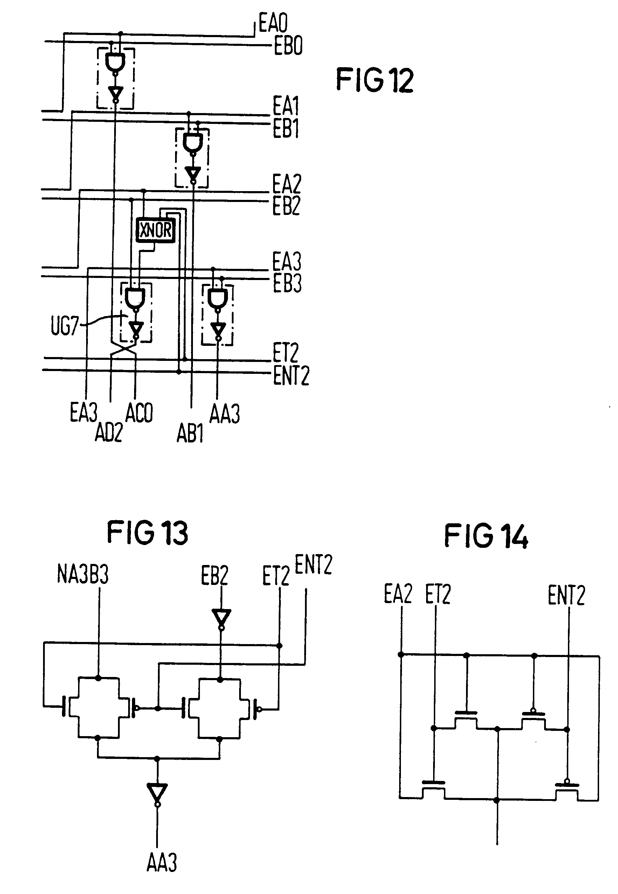

Eine Änderung der UND-Schaltung ergibt sich mit der UND-Schaltung UD4, die die Zelle 4K-1 betrifft, also nach FIG 3 die siebte Zelle SL7. Aus FIG 3 ist zu ersehen, daß diese UND-Schaltung im Vergleich zu den übrigen UND-Schaltungen in einem UND-Glied ein Multiplikandenbit invertiert mit dem Multiplikatorbit verknüpfen muß und zusätzlich noch in einem UND-Glied das MSB bit B3 des Multiplikators zum Ausgang der UND-Schaltung durchschalten muß. Eine Ausführung dieser UND-Schaltung UD4 ergibt sich aus FIG 11. Während zwei UND-Glieder UG5 und UG6 keine Änderung erfahren haben, sind die UND-Glieder UG7 und UG8 etwas anders aufgebaut. Das UND-Glied UG7 besteht ebenfalls aus einem NAND-Glied und einem Inverter, jedoch ist an den Einang EA2 eine EXNOR-Schaltung angeschlossen, die über die Prüfsignale ET2 und ENT2 angesteuert wird. Im Betriebsfall ist diese EXNOR-Schaltung so geschaltet, daß sie das Multiplikandenbit am Eingang EA2 invertiert an den Eingang des NAND-Gliedes des UND-Gliedes UG7 anschaltet. Im Prüffall dagegen wird über die Prüfsignale ET2 und ENT2 die EXNOR-Schaltung so angesteuert, daß das Multiplikandenbit am Eingang EA2 nicht invertiert zum UND-Glied durchgeschaltet wird. Das bedeutet, daß im Prüffall das UND-Glied UG7 wie alle anderen UND-Glieder behandelt wird und damit die Prüfung vereinfacht wird. Das UND-Glied UG8 besteht aus einem Inverter und einer am Ausgang angeordneten Multiplexerschaltung MUXN. Die Multiplexerschaltung MUXN wird ebenfalls von den Prüfsignalen ET2 und ENT2 angesteuert. Sie ist im Betriebsfall so geschaltet, daß das Multiplikator-bit auf dem Eingang EB2 zum Ausgang durchgeschaltet wird, dies ist das MSB bit B3 in FIG 3. Im Testfall dagegen werden die an den Eingängen EA3 und EB3 anliegenden Bit über das NAND-Glied durchgeschaltet, so daß im Testfall das UND-Glied UG8 wie die anderen UND-Glieder der UND-Schaltungen arbeitet.

Die restlichen UND-Schaltungen der Zeile Z1 sind UND-Schaltungen UD 5, die entsprechend der UND-Schaltung UD4 aufgebaut sind bis auf das UND-Glied UG8, das nicht erforderlich ist, da das MSE Bit des Multiplikators hier nicht zum Ausgang durchgeschaltet werden muß. Eine Ausführung ergibt sich aus FIG 12. Es ist zu sehen, daß entsprechend der Matrix in FIG 3 die mit dem MSB Bit B3 des Multiplikators zu verknüpfenden invertierten Multiplikandenbits im UND-Glied UG7 verknüpft werden, und daß die übrigen UND-Glieder normalen Aufbau haben. Zur Umschaltung des UND-Gliedes UG7 vom Betriebsfall in den Testfall sind wiederum die Prüfsignale ET2 und ENT2 vorgesehen.

Eine Ausführung der EXNOR-Schaltung ergibt sich aus FIG 14, eine Ausführung der Multiplexerschaltung MUXN aus FIG 13.

Eine Addierschaltung ergibt sich aus FIG 15. Es ist zu erkennen, daß die Addierschaltung aus zwei Volladdierern besteht, nämlich dem Volladdierer VA1 und dem Volladdierer VA2. Der Volladdierer VA1 hat drei Eingänge E1, E2, E3 und zwei Ausgänge, einen Ausgang für das Summenbit SB und ein Ausgang für das Übertragbit CBN, welches in diesem Fall invertiert ausgegeben wird. Der Volladdierer VA2 hat ebenfalls drei Eingänge, E4, E5, E6. Dem Eingang E5 wird das Summenbit SB vom ersten Volladdierer VA1 zugeführt, dem Eingang E6 ein invertiertes Übertragbit von einer benachbarten Zelle. Dem Eingang E4 kann entweder ein Partialprodukt zugeführt werden oder ein Übertragbit, je nachdem zu welcher Stufe die Addierschaltung gehört. Am Ausgang A3 gibt der Volladdierer VA2 das Summenbit SB, am Ausgang A4 das Übertragbit CB ab.

Wenn die Addierschaltung nach FIG 15 in der ersten Stufe verwendet wird, also als Addierschaltung ADI, dann wird am Eingang E1, E2, E3 jeweils ein Partialprodukt zugeführt, dem Eingang E4 ebenfalls ein Partialprodukt, dem Eingang E5 das Summenbit und dem Eingang E6 ein Übertragbit von dem ersten Volladdierer der Addierschaltung der ersten Stufe der nächst niederwertigeren Zelle. Aus FIG 19 kann dies entnommen werden. Hier sind die zwei niederwertigsten Zellen SL1 und SL0 gezeigt. Bei der Zelle SL1 werden der Addierschaltung ADI1 der ersten Stufe, die an eine zugeordnete UND-Schaltung angeschlossen ist, an den Eingängen El bis E3 Partialprodukte, am Eingang E4 ebenfalls ein Partialprodukt, am Eingang E5 das Summenbit des ersten Volladdierers und am Eingang E6 ein Übertragbit des ersten Volladdierers der benachbart angeordneten Addierschaltung der ersten Stufe zugeführt.

Der Addierschaltung ADII1 der zweiten Stufe der Zelle SL1 wird am Eingang E1 das Summenbit der Addierschaltung ADI2, am Eingang E2 das Übertragbit der Addierschaltung ADI2 der Zelle SL0, am Eingang E3 das Übertragbit der Addierschaltung ADI1 der Zelle SL0 zugeführt. Am Eingang E4 liegt das Summenbit der Addierschaltung ADI1 derselben Zelle SL1, am Eingang E5 das Summenbit des zugeordneten Volladdierers VA1 und am Eingang E6 das Übertragbit der Addierschaltung ADII1 der Zelle SL0, und zwar dessen ersten Volladdierers VA1 an.

Nach entsprechender Regel werden dann die Addierschaltungen der höheren Stufen geschaltet. Immer werden in einer Addierschaltung einer höheren Stufe beim ersten Volladdierer ein Summenbit und zwei Übertragbit und beim zweiten Volladdier zwei Summenbit und ein Übertragbit verknüpft.

Eine höhere Stufe von Addierschaltungen verknüpft also immer die Summenbit und Übertragbit von Addierschaltungen niederer Stufe. Dabei kann sich ergeben, daß eine Addierschaltung höherer Stufe die Ausgangssignale von Addierschaltungen verschiedener Stufe verknüpfen muß. Dies ist dann der Fall, wenn die Anzahl der Addierschaltungen pro Stufe nicht durch zwei teilbar ist.

Es ist bereits ausgeführt worden, daß bei der Zweierkomplementarstellung der zu verknüpfenden Binärzahlen fünf verschiedene UND-Schaltungen erforderlich sind, die sich allerdings nur geringfügig unterscheiden. Der Grund dazu ist im Zusammenhang mit FIG 3 erläutert worden. Wenn nur positive Zahlen ohne Vorzeichenbit miteinander verknüpft werden, dann ist nur eine UND-Schaltung UD1 erforderlich.

Um den Multiplizierer, und zwar das Multiplizierfeld MF testen zu können, müssen den UND-Schaltungen UD und den Addierschaltungen AD vorgegebene Bitmuster zugeführt werden und an den Ausgängen jeder Zelle SL die von den Zellen abgegebenen Ausgangssignale mit Sollsignalen verglichen werden. Der Vergleich ergibt dann, ob eine Zelle einwandfrei arbeitet oder nicht. Die Überprüfung der Zellen erfordert verhältnismäßig einfache Bitmuster am Eingang, wenn die Zellen SL alle auf gleiche Art betrieben werden können. Um dies zu erreichen, ist in FIG 5 und 6 jeweils eine Prüfschaltung TE und Prüfsignale TM vorgesehen. Der Aufbau der Prüfschaltung TE und die Funktion der Prüfsignale TM1 in FIG 5 bzw TM1 und TM2 bei FIG 6 wird nun in Verbindung mit den Schaltungen der FIG 15 bis 18 und den bereits erläuterten UND-Schaltungen dargestellt.

Gemäß FIG 6 werden die multiplikandenbit A den UND-Schaltungen im Feld III so zugeführt, daß jeweils ein Multiplikandenbit einer Zelle zugeführt wird und dann dieses Multiplikandenbit versetzt zur benachbarten Zelle weitergeführt wird. Die Multiplikandenbit im Feld II entsprechen alle dem MSB Bit des Multiplikanden und werden somit jeder Zelle zugeführt, die höherwertig ist als das MSB Bit des Multiplikanden. Eine Schaltung, über die das geschehen kann, ist in FIG 16 gezeigt. Die Multiplikandenbit $A_0$ bis $A_{m-1}$ werden jeweils einer Zelle $ZL_0$ bis $ZL_{m-1}$ zugeführt. Das höchstwertige Multiplikandenbit $A_{m-1}$ wird dann den übrigen Zellen, nämlich den Zellen $ZL_m$ - $ZL_{m+n-1}$ zugeführt.

Die UND-Schaltungen im Feld I, die im Betriebsfall an ihren Eingängen für den Multiplikanden eine O erhalten, müssen im Testfall mit einem bestimmten Multiplikandenbit angesteuert werden. Dies ist im Ausführungsbeispiel das Multiplikandenbit $A_0$. Um dies zu erreichen, ist eine Schaltung gemäß FIG 17 vorgesehen.

7

Den UND-Gliedern UG der UND-Schaltungen, die Partialprodukte im Feld I erzeugen, wird über ein UND-Glied UGT1 das Multiplikandenbit $A_0$ zugeleitet. An dem UND-Glied UGT1 liegt außerdem das Testsignal TM1 an. Je nach dem, welchen Wert das Testsignal TM1 hat, ist das Ausgangssignal des UND-Gliedes UGT1 O oder $A_0$. Die Erweiterung des Multiplikators entsprechend FIG 3 führt dazu, das 1 = 4k-1 UND-Glieder angesteuert werden müssen. Im Ausführungsbeispiel der FIG 3 wäre 1 gleich 7.

Da im Testfall den UND-Gliedern im Feld I $A_0$ zugeführt wird und die Multiplikatorbits unabhängig einstellbar sind, können die UND-Glieder mit verschiedenen Werten getestet werden.

Die Erläuterung der FIG 7 hat gezeigt, daß in der Zeile Z1 UND-Glieder UD2 bis UD5 verwendet werden. Dabei ist dort der Betriebsfall erläutert worden. Im Betriebsfall werden den UND-Gliedern, bis auf ein UND-Glied, die höchstwertigen Bits des Multiplikators zugeführt, z.B. in FIG 3 das Multiplikatorbit $B_3$. Eine Schaltung, mit der dies erreicht wird, zeigt FIG 18. Hier werden die Multiplikatorbit Bn-1 bis $B_{4k-2}$ in Abhängigkeit des Testsignals TM1 zu den UND-Gliedern über Multiplexer MUX durchgeschaltet. Im Testfall dagegen müssen diese UND-Glieder mit ihren Multiplikatoreingängen individuell eingestellt werden können. Dazu wird wiederum das Testsignal TM1 herangezogen, das die Multiplexer MUX so umschaltet, daß die erweiterten Multiplikatorbits Bn bis $B_{4k-1}$ an die UND-Glieder geschaltet werden. Einem UND-Glied, nämlich dem UND-Glied für die Reihe innerhalb der Matrix, in der das MSB Bit des Multiplikators zu den Partialprodukten einer Spalte hinzuaddiert wird, also in FIG 3 die letzte Zeile der Matrix, wird über ein UND-Glied UGT2, das vom Testsignal TN1 angesteuert wird, das erweiterte Multiplikatorbit $B_{4K-1}$ zugeleitet. In Abhängigkeit des Wertes des Testsignales TM1 erscheint am Ausgang des UND-Gliedes UGT2 eine O oder das Multiplikatorbit $B_{4K-1}$. Im Betriebsfall wird am Ausgang des UND-Gliedes UGT2 eine O abgegeben, im Testfall das Multiplikatorbit $B_{4K-1}$. Damit ist es möglich, die zugeordneten UND-Glieder individuell zu prüfen.

Im Testfall muß weiterhin dafür gesorgt werden, daß die Übertragseingänge der Addierschaltungen der Zelle SL0 mit demselben Übertrag wie an der Zelle SL1 versorgt werden. Die Übertragseingänge der Addierschaltungen der übrigen Zellen sind auf die übliche Weise geschaltet. Um dies zu erreichen, wird gemäß der FIG 19 der Übertragsausgang des ersten Volladdierers der Addierschaltung der ersten Stufe AD II über ein UND Glied UGT3 zum Übertragseingang des zweiten Volladdierers derselben Addierschaltung geführt. Der Übertragsausgang der Addierschaltung ADI1 der ersten Stufe wird dann über ein weiteres UND-Glied UGT4 zum Übertragseingang der nächsten Addierschaltung ADII1 der zweiten Stufe geschaltet. Entsprechendes gilt auch für die übrigen Addierschaltungen. Zum Beispiel wird die Addierschaltung ADI2 der zweiten Reihe mit ihrem Übertragsausgang mit dem Übertragseingang der Addierschaltung ADII1 der zweiten Stufe verbunden usw.. Die Zusammenschaltung kann FIG 19 entnommen werden. Mit Hilfe des Testsignals TM1, das an die UND-Glieder UGT3 und UGT4 angeschlossen ist, kann an die Übertragseingänge entweder das Übertragssignal von einem Volladdierer dieser oder einer vorhergehenden Stufe oder der Wert O angelegt werden. So wird erreicht, daß im Betriebsfall das Übertragssignal, das in der ersten Zelle SL0 verwertet wird, O ist, dagegen im Testbetrieb ein festgelegter Übertrag zu den Addierschaltungen der ersten Zelle SL0 gelangt. Damit ist es möglich, daß durch Anlegen von Testsignalen definierte Ausgangssignale erzeugt werden können, die auf ihre Richtigkeit überprüft werden können. Der dazu erforderliche Aufwand ist gering.

## Patentansprüche

1.  Multiplizierer zur Verknüpfung eines m-stelligen Multiplikanden (A) und eines n-stelligen Multiplikators (B), die beide als Dualzahlen dargestellt sind,

    a) mit m+n nebeneinander angeordneten Zellen (SL), jeweils eine pro Produktstelle (P), von denen jede Zelle (SL) jeweils UND-Schaltungen (UD) zur Bildung der der Produktstelle (P) zugeordneten Partialprodukte und Addierschaltungen (AD) zur Aufsummierung der Partialprodukte für diese Produktstelle enthält,

    b) mit folgendem Zusammenhang der UND Schaltungen (UD) und Addierschaltungen (AD) innerhalb einer Zelle (SL):

    b1) jede UND-Schaltung (UD) besteht aus mindestens zwei UND-Gliedern, von denen jedes ein Bit des Multiplikanden (A) und ein Bit des Multiplikators (B) zu einem Partialprodukt verknüpft,

    b2) eine Addierschaltung erster Stufe (ADI) verknüpft jeweils die von einer UND-Schaltung (UD) erzeugten Partialprodukte zu einer Partialsumme (SB) und einem Partialübertrag (CB),

    b3) Addierschaltungen zweiter Stufe (ADII) verknüpfen jeweils mindestens zwei Partialsummen (SB) der ersten Stufe derselben Produktstelle und mindestens zwei Partialüberträge (CB) der ersten Stufe der nächst niederwertigeren Produktstelle zu einer weiteren Partialsumme (SB) und einem weiteren Partialübertrag (CB),

    b4) Addierschaltungen dritter Stufe (ADIII) verknüpfen jeweils mindestens zwei Partialsummen (SB) der zweiten Stufe derselben Produktstelle und mindestens zwei Partialüberträge (CB) der zweiten Stufe der nächst niederwertigeren Produktstelle zu einer weiteren Partialsumme (SB) und einem weiteren Partialübertrag (CB),

b5) der Verknüpfungsvorgang wird mit Hilfe der baumaratig eingesetzten Addierschaltungen der einzelnen Stufen solange wiederholt, bis die Anzahl der in einer Stufe derselben Produkstelle erzeugten Partialsummen und der Partialüberträge von der nächst niederwertigeren Produktstelle so ist, daß sie mit einer finalen Addierschaltung zu einem finalen Summenbit (S) und einem finalen Übertragsbit (C) pro Produktstelle verknüpfbar sind,

b6) das finale Summenbit (S) einer Produktstelle und das finale Übertragsbit (C) der vorhergehenden Produktstelle werden in einer Addierschaltung (ADD) zu einem Wert P der entsprechenden Produktstelle verknüpft, und

c) mit folgender Anordnung der UND-Schaltungen (UD) und Addierschaltungen (AD) innerhalb einer Zelle (SL):

c1) einer ersten UND-Schaltung (UD1) folgt eine Addierschaltung erster Stufe (ADI1),

c2) dieser Addierschaltung folgt eine zweite UND-Schaltung (UD1) an die sich eine weiters Addierschaltung erster Stufe (ADI2) für die Ausgangssignale dieser UND-Schaltung anschließt,

c3) an die Addierschaltung erster Stufe (ADI2) schließt eine Addierschaltung zweiter Stufe (ADII1) für die vorhergehenden Addierschaltungen erster Stufe (ADI1, ADI2) an,

c4) diese Aufeinanderfolge c1) bis c2) wiederholt sich bis zu einer weiteren Addierschaltungen zweiter Stufe (ADII), dann folgt auf die weitere Addierschaltung zweiter Stufe eine Addierschaltung dritter Stufe (ADIII), die die Ausgangssignale der Addierschaltungen zweiter Stufe (ADII) verknüpft,

c5) diese Aufeinanderfolge wird entsprechend den vorhergehenden Schritten c1) bis c4) fortgesetzt bis die finale Addierschaltung aufgetreten ist.

2. Multiplizierer nach Anspruch 1,
dadurch **gekennzeichnet,**
daß für den Fall, daß innerhalb einer Zelle (SL) pro Stufe eine ungerade Anzahl von Addierschaltungen (AD) vorliegen, eine Addierschaltung dieser Stufe und eine Addierschaltung einer folgenden Stufe mit den Addiereingängen einer Addierschaltung einer im Vergleich zu den beiden Addierschaltungen höherer Stufe verbunden sind.

3. Multiplizierer nach Anspruch 1 oder 2,
dadurch **gekennzeichnet,**
daß jede Addierschaltung (AD) aus zwei hintereinanderliegenden Volladdierern (VA1, VA2) besteht, die jeweils drei Eingänge haben.

4. Multiplizierer nach Anspruch 3, dadurch
**gekennzeichnet,** daß jede Und-Schaltung (UD) aus vier UND-Gliedern (UG) besteht, von denen jede ein Multiplikandenbit (A) und ein Multiplikatorbit (B) verknüpft.

5. Multiplizierer nach Anspruch 4,
dadurch **gekennzeichnet,**
daß eine Addierschaltung (ADI) folgendermaßen geschaltet ist:
– an den drei Eingängen (E1, E2, E3) des ersten Volladdierers (VA1) liegen drei Partialprodukte an,
– am einen Eingang (E4) des zweiten Volladdierers (VA2) liegt das vierte Partialprodukt an, am zweiten Eingang (E5) das Summenbit (SB) des ersten Volladdierers (VA1), am dritten Eingang (E6) ein Übertragsbit vom ersten Volladdierer der der nächst niederwertigeren Produktstelle zugeordneten Addierschaltung der ersten Stufe.

6. Multiplizierer nach Anspruch 5,
dadurch **gekennzeichnet,**
daß eine Addierschaltung höherwertigerer Stufe folgendermaßen geschaltet ist:
– an dem ersten Eingang (E1) des ersten Volladdierers (VA1) liegt das Summenbit (SB) von einer Addierschaltung einer niederwertigeren Stufe an, am zweiten und dritten Eingang (E2, E3) liegt je ein Übertragbit vom Übertragsausgang der der nächst niederwertigeren Produktstelle zugeordneten Addierschaltungen niederer Stufe an,
– am ersten Eingang (E4) des zweiten Volladdierers (VA2) liegt das Summenbit einer Addierschaltung der niederwertigeren Stufe an, am zweiten Eingang (E5) das Summenbit vom ersten Volladdierer derselben Stufe und am dritten Eingang (E6) ein Übertragbit vom ersten Volladdierer der der nächst niederwertigeren Produktstelle zugeordneten Addierschaltung gleicher Stufe.

7. Multiplizierer nach einem der Ansprüche 1-6,
dadurch **gekennzeichnet,**
daß alle Zellen (SL) eine gleiche Anzahl von UND-Schaltungen (UD) und eine gleiche Anzahl von Addierschaltungen (AD) aufweisen, daß der Multiplikandeneingang von UND-Schaltungen (UD), die zur Erzeugung des Wertes der niederwertigeren Produktstellen nicht erforderliche Partialprodukte (Feld I) erzeugen, auf O gesetzt ist, und daß der Multiplikandeneingang von UND-Schaltungen (UD), die zur Erzeugung des Wertes der höherwertigeren Produktstellen nicht erforderliche Partialprodukte (Feld II) erzeugen, bei Multiplikation von Zahlen ohne Vorzeichen auf O gesetzt ist.

8. Multiplizierer nach einem der Ansprüche 1-6,
dadurch **gekennzeichnet,**
daß alle Zellen (SL) eine gleiche Anzahl von UND-Schaltungen (UD) und eine gleiche Anzahl von Addierschaltungen (AD) aufweisen, daß zur Multiplikation von Binärzahlen in Zweierkomplementdarstellung der Multiplikandeneingang von UND-Schaltungen (UD), die zur Erzeugung des Wertes der niederwertigeren Produktstellen nicht erforderliche Partialprodukte (Feld I) erzeugen, auf O gesetzt ist, daß der Multiplikandeneingang von UND-Schaltungen (UD), die zur Erzeugung des Wertes der höherwertigeren Produktstellen nicht erforderliche Partialprodukte (Feld II) erzeugen, mit dem most significant bit (MSB) des Multiplikanden verbunden ist, daß die mit dem Vorzeichenbit (MSB) des Multiplikators (B) zu verknüpfenden Multiplikandenbits invertiert an die zugeordneten UND-Schaltungen angelegt sind und daß bei der Produktstelle, bei der das most significant bit (MSB) des Multiplikators mit dem niederwertigsten Bit des Multiplikanden ($A_0$) verknüpft wird, das most significant bit (MSB) des Multiplikators addiert wird.

9. Multiplizierer nach Anspruch 8,
dadurch **gekennzeichnet,**
daß zu Prüfzwecken bei einer Multiplikation von Binärzahlen in Zweierkomplementdarstellung die Anzahl der Multiplikandenbit (a) verdoppelt wird, das die dadurch entstehenden zusätzlichen Partialprodukte (Feld II) gebildet werden aus dem most significant bit (MSB) des Multiplikanden und den Multiplikatorbits, daß die Anzahl der Multiplikatorbits (B) immer auf eine durch vier dividierbare Zahl erweitert wird, wobei das höchstwertige Bit der Erweiterung im Betriebsfall "O", im Testfall einstellbar ist, die niederwertigeren Bit der Erweiterung im Betriebsfall gleich dem most significant bit ($B_{n-1}$), im Testfall individuell einstellbar sind.

10. Multiplizierer nach Anspruch 9,
dadurch **gekennzeichnet,**
daß die UND-Glieder von UND-Schaltungen, die Partialprodukte im Feld I erzeugen, im Testfall mit den niederwertigsten Bit ($A_0$) des Multiplikanden verbunden sind.

11. Multiplizierer nach Anspruch 10 oder 11,
dadurch **gekennzeichnet,**
daß den UND-Gliedern von UND-Schaltungen (UD4, UD5), die Partialprodukte mit invertiertem Multiplikanden bilden, im Testfall diese Multiplikanden nicht invertiert zugeführt werden.

12. Multiplizierer nach einem der Ansprüche 9 bis 11,
dadurch **gekennzeichnet,**
daß in der letzten Reihe von UND-Schaltungen eine UND-Schaltung (UD4) mit folgenden UND-Gliedern enthalten ist:
– ein UND-Glied, Über das im Betriebsfall das zugeordnete Multiplikandenbit invertiert zugeführt wird, dem jedoch im Testfall dieses Multiplikandenbit nicht invertiert zugeführt wird,
– ein UND-Glied, dem das höchstwertige Bit ($B_1$) der Multiplikatorerweiterung zugeleitet wird, an dessen Ausgang ein multiplexer (MUXN) angeordnet ist, der entweder das Ausgangssignal des UND-Gliedes (im Testfall) oder im Betriebsfall das most significant bit des multiplikators ($B_{n-1}$) durchschaltet,
– weitere UND-Glieder, die entweder Partialprodukte aus den zugeordneten Multiplikandenbits oder Multiplikatorbits oder deren Erweiterung bilden.

13. Multiplizierer nach einem der Ansprüche 9 bis 12,
dadurch **gekennzeichnet,**

daß im Testfall die Übertrageingänge der der niederwertigsten Produktstelle (P$_0$) zugeordneten Addier-schaltungen folgendermaßen miteinander verbunden sind:

– der Übertrageingang des zweiten Volladdierers einer Addierschaltung der ersten Stufe (ADI) ist mit dem Übertragausgang des ersten Volladdierers dieser Stufe verbunden,

– die Übertrageingänge des ersten Volladdierers der zweiten Stufe (ADII) ist mit den Übertragausgängen der zweiten Volladdierer der Addierschaltungen der ersten Stufe (ADI) verbunden usw., so daß die Überträge nacheinander durch die einzelnen Addierschaltungen aufeinanderfolgender Addierschaltungen laufen.

## Claims

1. Multiplier for performing a logic operation on an m-digit multiplicand (A) and an n-digit multiplier factor (B) that are both represented as binary numbers,

    a) having m+n cells (SL) arranged side-by-side, respectively one per product place (P), whereof each cell (SL) respectively contains AND circuits (UD) for forming the partial products allocated to the product place (P) and adder circuits (AD) for summing up the partial products for this product place,

    b) having the following relationship between the AND circuits (UD) and adder circuits (AD) within a cell (SL):

    b1) each AND circuit (UD) consists of at least two AND elements, whereof each logically combines one bit of the multiplicand (A) and one bit of the multiplier factor (B) to form a partial product,

    b2) an adder circuit of the first stage (ADI) respectively logically combines the partial products generated by an AND circuit (UD) to form a partial sum (SB) and a partial carry (CB),

    b3) adder circuits of the second stage (ADII) respectively logically combine at least two partial sums (SB) of the first stage of the same product place and at least two partial carries (CB) of the first stage of the next less significant product place to form a further partial sum (SB) and a further partial carry (CB),

    b4) adder circuits of the third stage (ADIII) respectively logically combine at least two partial sums (SB) of the second stage of the same product place and at least two partial carries (CB) of the second stage of the next less significant product place to form a further partial sum (SB) and a further partial carry (CB),

    b5) the logical combination procedure is repeated with the assistance of the adder circuits, used in a tree-like fashion, of the individual stages until the number of the partial sums and of the partial carries from the next less significant product place that are generated in a stage of the same product place is such that they can be logically combined by a final adder circuit to form a final sum bit (S) and a final carry bit (C) per product place,

    b6) the final sum bit (S) of a product place and the final carry bit (C) of the preceding product place are logically combined in an adder circuit (ADD) to form a value P of the corresponding product place and

    c) having the following arrangement of the AND circuits (UD) and adder circuits (AD) within a cell (SL):

    c1) a first AND circuit (UD1) is followed by an adder circuit of the first stage (ADI1),

    c2) this adder circuit is followed by a second AND circuit (UD1) to which a further adder circuit of the first stage (ADI2) for the output signals of this AND circuit is connected,

    c3) an adder circuit of the second stage (ADII1) for the preceding adder circuits of the first stage (ADI1, ADI2) is connected to the adder circuit of the first stage (ADI2)

    c4) this sequence c1) to c3) is repeated up to a further adder circuit of the second stage (ADII), whereupon the further adder circuit of the second stage is followed by an adder circuit of the third stage (ADIII) that operates on output signals of the adder circuits of the second stage (ADII),

    c5) this sequence is continued in accordance with the preceding steps c1) to c4) until the final adder circuit has occurred.

2. Multiplier according to Claim 1, characterised in that in the case when an uneven number of adder circuits (AD) are present per stage within a cell (SL), an adder circuit of this stage and an adder circuit of a following stage are connected to adder inputs of an adder circuit of a stage that is higher by comparison with the two adder circuits.

3. Multiplier according to Claim 1 or 2, characterised in that each adder circuit (AD) consists of two full adders (VA1, VA2) which are located one after another other and have three inputs in each case.

4. Multiplier according to Claim 3, characterised in that each AND circuit (UD) consists of four AND elements (UG), whereof each operates on one multiplicand bit (A) and one multiplier factor bit (B).

5. Multiplier according to Claim 4, characterised in that an adder circuit (ADI) is connected in the following way:
   – three partial products are present at the three inputs (E1, E2, E3) of the first full adder (VA1), and
   – the fourth partial product is present at an input (E4) of the second full adder (VA2), the sum bit (SB) of the first full adder (VA1) is present at the second input (E5), and a carry bit from the first full adder of the adder circuit of the first stage that is allocated to the next less significant product place is present at the third input (E6).

6. Multiplier according to Claim 5, characterised in that an adder circuit of a more significant stage is connected in the following way:
   – the sum bit (SB) from an adder circuit of a less significant stage is present at the first input (E1) of the first full adder (VA1) , a carry bit from the carry output of the adder circuits of the lower stage that are allocated to the next less significant product place is present at the second and third input (E2, E3) in each case,
   – the sum bit of an adder circuit of the less significant stage is present at the first input (E4) of the second full adder (VA2), the sum bit from the first full adder of the same stage is present at the second input (E5), and a carry bit from the first full adder of the adder circuit of the same stage that is allocated to the next less significant product case is present at the third input (E6).

7. Multiplier according to one of Claims 1 - 6, characterised in that all cells (SL) have an identical number of AND circuits (UD) and an identical number of adder circuits (AD), in that the multiplicand input of AND circuits (UD) which generate partial products (field I) that are not required for generating the value of the less significant product places is set to 0, and in that the multiplicand input of AND circuits (UD) which generate partial products (field II) that are not required for generating the value of the more significant product places is set to 0 in the case of multiplication of numbers without an operational sign.

8. Multiplier according to one of Claims 1 - 6, characterised in that all cells (SL) have an identical number of AND circuits (UD) and an identical number of adder circuits (AD), in that for multiplication of binary numbers in two's complement representation the multiplicand input of AND circuits (UD) which generate partial products (field I) that are not required for generating the value of the less significant product places is set to 0, in that the multiplicand input of AND circuits (UD) which generate partial products (field II) that are not required for generating the value of the more significant product places is connected to the most significant bit (MSB) of the multiplicand, in that the multiplicand bits which are to be logically combined by the operational sign bit (MSB) of the multiplier factor (B) are applied inverted to the allocated AND circuits, and in that the most significant bit (MSB) of the multiplier factor is added in the case of the product place whereat the most significant bit (MSB) of the multiplier factor is logically combined with the least significant bit of the multiplicand ($A_0$).

9. Multiplier according to Claim 8, characterised in that for test purposes in the case of multiplication of binary numbers in two's complement representation the number of multiplicand bits (a) is doubled, in that the additional partial products (field II) thereby produced are formed from the most significant bit (MSB) of the multiplicand and from the multiplier factor bits, and in that the number of the multiplier factor bits (B) is always expanded to a number divisible by four, the most significant bit of the expansion being "0" in the operating case and adjustable in the test case, and the less significant bits of the expansion being equal to the most significant bit ($B_{n-1}$) in the operating case and individually adjustable in the test case.

10. Multiplier according to Claim 9, characterised in that the AND elements of AND circuits which generate partial products in the field I are connected to the least significant bit ($A_0$) of the multiplicand in the test case.

11. Multiplier according to Claim 10, characterised in that the AND elements of AND circuits (UD4, UD5) that form partial products with an inverted multiplicand are supplied with these multiplicands non-inverted in the test case.

12. Multiplier according to one of Claims 9 to 11, characterised in that an AND circuit (UD4) having the following AND elements is contained in the last row of AND circuits:

– one AND element via which the allocated multiplicand bit is supplied inverted in the operating case, but to which this multiplicand bit is supplied non-inverted in the test case,

– one AND element to which the most significant bit ($B_1$) of the multiplier factor expansion is fed and at whose output a multiplexer (MUXN) is arranged which switches through either the output signal of an AND element (in the test case) or the most significant bit of the multiplier factor ($B_{n-1}$) in the operating case,

– further AND elements which form either partial products from the allocated multiplicand bits or multiplier factor bits or the expansion thereof.

13. Multiplier according to one of Claims 9 to 12, characterised in that in the test case the carry inputs of the adder circuits allocated to the least significant product place ($P_0$) are connected to one another in the following way:

– the carry input of the second full adder of an adder circuit of the first stage (ADI) is connected to the carry output of the first full adder of this stage,

– the carry inputs of the first full adder of the second stage (ADII) are connected to the carry outputs of the second full adder of the adder circuits of the first stage (ADI), etc, so that the carries run successively through the individual adder circuits of consecutive stages.


## Revendications

1. Multiplicateur pour combiner un multiplicande (A) à m chiffres avec un multiplicateur (B) à n chiffres, qui sont tous deux représentés sous la forme de nombres binaires, comportant

a) m+n cellules (SL) disposées les unes à côté des autres, à raison d'une cellule pour chaque chiffre (P) du produit, et parmi lesquelles chaque cellule (SL) comporte respectivement des circuits ET (UD) servant à former les produits partiels associés au chiffre (P) du produit et des circuits additionneurs pour additionner les produits partiels pour ce chiffre du produit,

b) avec l'association suivante des circuits ET (UD) et des circuits additionneurs (AD) à l'intérieur d'une cellule (SL) :

b1) chaque circuit ET (UD) est constitué par au moins deux éléments ET, dont chacun réunit un bit du multiplicande (A) et un bit du multiplicateur (B) pour former un produit partiel,

b2) un circuit additionneur d'un premier étage (ADI) réunit respectivement les produits partiels fournis par un circuit ET (UD), pour former une somme partielle (SB) et un report partiel (CB),

b3) des circuits additionneurs d'un second étage (ADII) réunissent respectivement au moins deux sommes partielles (SB) du premier étage pour le même chiffre du produit et au moins deux reports partiels (CB) du premier étage pour le chiffre du produit de rang immédiatement inférieur, pour former une autre somme partielle (SB) et un autre report partiel (CB),

b4) des circuits additionneurs d'un troisième étage (ADIII) réunissent respectivement au moins deux sommes partielles (SB) du second étage pour le même chiffre du produit et au moins deux reports partiels (CB) du second étage pour le chiffre du produit de rang immédiatement inférieur pour former une autre somme partielle (SB) et un autre report partiel (CB),

b5) l'opération de combinaison est répétée à l'aide des circuits additionneurs, utilisés selon une structure arborescente, des différents étages jusqu'à ce que le nombre des sommes partielles produites dans un étage pour le même chiffre du produit et les reports partiels pour le chiffre du produit de rang immédiatement inférieur soient tels qu'ils puissent être combinés par un circuit additionneur final pour former un bit final de somme (S) et un bit de transfert final (C) pour chaque chiffre du produit,

b6) le bit final de somme (S) d'un chiffre du produit et le bit de report final (C) du chiffre précédent du produit sont combinés dans un circuit additionneur (ADD) pour former une valeur P du chiffre correspondant du produit, et

c) comprenant la disposition suivante des circuits ET (UD) et des circuits additionneurs (AD) à l'intérieur d'une cellule (SL) :

c1) un circuit additionneur du premier étage (ADI1) disposé en aval d'un premier circuit ET (UD1),

c2) en aval de ce circuit additionneur est disposé un second circuit ET (UD1), auquel est raccordé un autre circuit additionneur du premier étage (ADI2) pour les signaux de sortie de ce circuit ET,

c3) au circuit additionneur du premier étage (ADI2) est raccordé un circuit additionneur du second étage (ADII1) pour les circuits additionneurs précédents du premier étage (ADI1, ADI2),

c4) cette succession c1) à c3) se répète jusqu'à un autre circuit additionneur du second étage (ADII),

EP 0 424 410 B1

auquel cas, en aval de l'autre circuit additionneur du second étage, est disposé un circuit additionneur du troisième étage (ADIII), qui combine les signaux de sortie des circuits additionneurs du second étage (ADII),

c5) cette succession se poursuit, conformément aux pas précédents c1) à c4) jusqu'à ce que le circuit additionneur final soit atteint.

2. Multiplicateur suivant la revendication 1, caractérisé par le fait que, dans le cas où un nombre impair de circuits additionneur (AD1) sont présents dans une cellule (SL) pour chaque étage, un circuit additionneur de cet étage et un circuit additionneur d'un étage suivant sont réunis à des entrées d'addition d'un circuit additionneur d'un étage de rang supérieur aux deux circuits additionneurs.

3. Multiplicateur suivant la revendication 1 ou 2, caractérisé par le fait que chaque circuit additionneur (AD1) est constitué de deux additionneurs complets (VA1,VA2) branchés en série, qui possèdent respectivement trois entrées.

4. Multiplicateur suivant la revendication 3, caractérisé par le fait que chaque circuit ET (UD) est constitué de quatre éléments ET (UG) , dont chacun combine un bit (A) du multiplicande et un bit (B) du multiplicateur.

5. Multiplicateur suivant la revendication 4, caractérisé par le fait qu'un circuit additionneur (ADI) est branché de la manière suivante :

   – trois produits partiels sont appliqués aux trois entrées (E1,E2,E3) du premier additionneur complet (V1),

   – le quatrième produit partiel est appliqué à une entrée (E4) du second additionneur complet (VA2), le bit de somme (SB) du premier additionneur complet (V1) est appliqué à la seconde entrée (E5), un bit de report du premier additionneur du circuit additionneur du premier étage, associé au chiffre du produit de rang immédiatement inférieur, est appliqué à la troisième entrée (E6).

6. Multiplicateur suivant la revendication 5, caractérisé par le fait qu'un circuit additionneur d'un étage de rang supérieur est branché de la manière suivante :

   – le bit de somme (SB) d'un circuit additionneur d'un étage de rang inférieur est appliqué à la première entrée (E1) du premier additionneur complet (VAI), respectivement un bit de report délivré par la sortie de report des circuits additionneurs d'un étage inférieur, associés au chiffre du produit de rang immédiatement inférieur, est appliqué aux seconde et troisième entrée (E2,E3),

   – le bit de somme d'un circuit additionneur de l'étage de rang inférieur est appliqué à la première entrée (E4) du second additionneur complet (VA2), le bit de somme du premier additionneur complet du même étage est appliqué à la seconde entrée (E5), et un bit de report du premier additionneur complet du circuit additionneur du même étage, qui est associé au chiffre du produit de rang immédiatement inférieur, est appliqué à la troisième entrée (E6).

7. Multiplicateur suivant l'une des revendications 1 à 6, caractérisé par le fait que toutes les cellules (SL) possèdent un même nombre de circuits ET (UD) et un même nombre de circuits additionneurs (AD), que l'entrée du multiplicande de circuits ET (UD), qui produisent des produits partiels (zone I) non nécessaires pour l'obtention de la valeur des chiffres du produit de rang inférieur, est positionnée à 0, et que l'entrée du multiplicande du circuit ET (UD), fournissant des produits partiels (zone II) non nécessaires pour la production de la valeur des chiffres du produit de rang supérieur, est positionnée à 0 lors de la multiplication de nombres sans signe.

8. Multiplicateur suivant l'une des revendications 1-6, caractérisé par le fait que toutes les cellules (SL) possèdent un même nombre de circuits ET (UD) et un mène nombre de circuits additionneurs (AD), que pour la multiplication de nombres binaires selon la représentation avec complémentation à deux, l'entrée du multiplicande de circuits ET (UD), fournissant des produits partiels (zone I) non nécessaires pour la production de la valeur des chiffres du produit de rang inférieur, est positionnée à 0, que l'entrée du multiplicande de circuits ET (UD), fournissant des produits partiels (zone II) non nécessaires pour la production de la valeur des chiffres du produit de rang supérieur, est raccordée au bit de poids maximum (MSB) du multiplicande, que les bits du multiplicande, qui doivent être combinés avec le bit de signe (MSB) du multiplicateur (B), sont appliqués, en étant inversés aux circuits ET associés, et que pour le chiffre du produit, pour lequel le bit de poids maximum (MSB) du multiplicateur est combiné au bit de poids minimum du multiplicande ($A_0$), le bit de poids maximum (MSB) du multiplicateur est ajouté.

**9.** Multiplicateur suivant la revendication 8, caractérisé par le fait que pour effectuer des contrôles lors d'une multiplication de nombres binaires dans la représentation avec complémentation à deux, le nombre des bits (a) du multiplicande est doublé, que les produits partiels supplémentaires (zone II) , qui sont obtenus de ce fait, sont formés par le bit de poids maximum (MSB) du multiplicande et par les bits du multiplicateur, que le nombre des bits (B) du multiplicateur est toujours étendu à un nombre divisible par quatre, le bit de poids maximum de l'extension étant "0" dans le cas du fonctionnement et étant réglable dans le cas du test, tandis que les bits de poids inférieur de l'extension sont égaux au bit de poids maximum ($B_{n-1}$) dans le cas du fonctionnement, et réglables individuellement dans le cas du test.

**10.** Multiplicateur suivant la revendication 9, caractérisé par le fait que les éléments ET, fournissant les produits partiels dans la zone I, sont raccordés, dans le cas du test, aux bits de poids le plus faible ($A_0$) du multiplicande.

**11.** Multiplicateur suivant la revendication 10 ou 11, caractérisé par le fait que, dans le cas du test, aux éléments ET de circuits ET (UD4,UD5), qui forment des produits partiels avec un multiplicande inversé, ces multiplicandes sont envoyés sans inversion.

**12.** Multiplicateur suivant l'une des revendications 9 à 11, caractérisé par le fait
que la dernière rangée de circuits ET comporte un circuit ET (UD4) avec les éléments ET suivants :
– un élément ET, au moyen duquel, dans le cas du fonctionnement, le bit associé du multiplicande est envoyé en étant inversé, et auquel cependant, dans le cas du test, ce bit de multiplicande est envoyé sans être inversé,
– un élément ET, auquel est envoyé le bit de poids maximum ($B_1$) de l'extension du multiplicateur et à la sortie duquel est disposé un multiplicateur (MUXN), qui transmet soit le signal de sortie de l'élément ET (dans le cas du test), soit, dans le cas du fonctionnement, le bit de poids maximum du multiplicateur ($B_{n-1}$),
– d'autres circuits ET, qui forment des produits partiels soit à partir des bits associés du multiplicande ou du multiplicateur, soit à partir de leur extension.

**13.** Multiplicateur suivant l'une des revendications 9 à 12, caractérisé par le fait
que, dans le cas du test, les entrées de report des circuits additionneurs associés au chiffre ($P_0$) du produit de poids le plus faible, sont réunis entre elles de la manière suivante :
– l'entrée de report du second additionneur complet d'un circuit additionneur du premier étage (ADI) est raccordée à la sortie de report du premier additionneur complet de cet étage,
– les entrées de report du second additionneur complet du second étage (ADII) sont raccordées aux sorties de report du second additionneur complet des circuits additionneurs du premier étage (ADI), etc. de sorte que les reports sont transmis successivement par les circuits additionneurs individuels à des circuits additionneurs successifs.

# FIG 1

$$MA$$

$$PP$$

| 0 | 0 | ... | 0 | 0 | $A_{m-1} B_0$ | ... | $A_1 B_0$ | $A_0 B_0$ |
| 0 | 0 | ... | 0 | $A_{m-1} B_1$ | $A_{m-2} B_1$ | ... | $A_0 B_1$ | 0 |

II      III      I

0   $A_{(m-1)} B_{(n-1)}$ ...    $A_0 B_{n-1}$   0   0

$P_{m+n}$         $P_{n-1}$       $P_1$       $P_0$

# FIG 4

$A_3$    $A_7$    $A_{11}$    $A_{15}$

UD    UD    UD    UD

$B_{12}$ $B_{13}$ $B_{14}$ $B_{15}$   $A_2 A_1 A_0$

$B_8$ $B_9$ $B_{10}$ $B_{11}$   $A_6 A_5 A_4$

$B_4$ $B_5$ $B_6$ $B_7$   $A_{10} A_9 A_8$

$B_0$ $B_1$ $B_2$ $B_3$   $A_{14} A_{13} A_{12}$

CB   CB   CB   CB    ADI

SB

CB    CB    AD II

C    AD III

SL

S

# FIG 2

| $A_6 = A_3$ | $A_5 = A_3$ | $A_4 = A_3$ | $A_3$ | $A_2$ | $A_1$ | $A_0$ | |
|---|---|---|---|---|---|---|---|
| $A_3 B_0$ | $A_3 B_0$ | $A_3 B_0$ | $A_3 B_0$ | $A_2 B_0$ | $A_1 B_0$ | $A_0 B_0$ | $B_0$ |
| II $A_3 B_1$ | $A_3 B_1$ | $A_3 B_1$ | $A_2 B_1$ | $A_1 B_1$ | $A_0 B_1$ | | $B_1$ |
| $A_2 B_2$ | $A_3 B_2$ | $A_2 B_2$ | $A_1 B_2$ | $A_0 B_2$ | | | $B_2$ |
| $\overline{A_3} B_3$ | $\overline{A_2} B_3$ | $\overline{A_1} B_3$ | $\overline{A_0} B_3$ | | | I | $B_3$ |
| | III | | $B_3$ | | | | |
| $P_7$ | $P_6$ | $P_5$ | $P_4$ | $P_3$ | $P_2$ | $P_1$ | $P_0$ |

# FIG 3

$m = 4$ , $n = 4$

| $A_7 = A_3$ | $A_6 = A_3$ | $A_5 = A_3$ | $A_4 = A_3$ | $A_3$ | $A_2$ | $A_1$ | $A_0$ | |
|---|---|---|---|---|---|---|---|---|
| $A_3 B_0$ | $A_3 B_0$ | $A_3 B_0$ | $A_3 B_0$ | $A_3 B_0$ | $A_2 B_0$ | $A_1 B_0$ | $A_0 B_0$ | $B_0$ |
| $A_3 B_1$ | $A_3 B_1$ | $A_3 B_1$ | $A_3 B_1$ | $A_2 B_1$ | $A_1 B_1$ | $A_0 B_1$ | $A_0$ | $B_1$ |
| $A_3 B_2$ | $A_3 B_2$ | $A_3 B_2$ | $A_2 B_2$ | $A_1 B_2$ | $A_0 B_2$ | 0 | 0 | $B_2$ |
| $A_3 B_3$ | $A_3 B_3$ | $A_2 B_3$ | $A_1 B_3$ | $A_0 B_3$ | 0 | 0 | 0 | $B_3$ |
| $A_3 B_3$ | $A_2 B_3$ | $A_1 B_3$ | $A_0 B_3$ | 0 | 0 | 0 | 0 | $B_4 = B_3$ |
| $A_2 B_3$ | $A_1 B_3$ | $A_0 B_3$ | 0 | 0 | 0 | 0 | 0 | $B_5 = B_3$ |
| $\overline{A_1} B_3$ | $\overline{A_0} B_3$ | 0 | 0 | 0 | 0 | 0 | 0 | $B_6 = B_3$ |
| 0 | $B_6$ | 0 | 0 | 0 | 0 | 0 | 0 | $B_7 = 0$ |
| $P_7$ | $P_6$ | $P_5$ | $P_4$ | $P_3$ | $P_2$ | $P_1$ | $P_0$ | |

## FIG 5

## FIG 6

# FIG 7

FIG 8

EA0
EB0
UG1
EA1
EB1
UG2
EA2
EB2
UG3
EA3
EB3
UG4

EA3   AC2   AA3
   AD0   AB1

FIG 9

EA0
EB0
EA1
EB1
EA2
EB2
EA3
EB3
ET2

AD2   AB1
EA3   AC0   AA3

**FIG 10**

EA0
EB0

EA1
EB1

EA2
EB2

EA3
EA3

ET2
ENT2

ET2

AD2 AB1
EA3 AC0 AA3

**FIG 11**

EA0
EB0

UG5

EA1
EB1

UG6

EA2
EB2

XNOR

EA3
EB3

UG7

UG8

MUXN

ET2
ENT2

AD2 AB1
EA3 AC0 AA3

EA0
EB0

**FIG 12**

EA1
EB1

EA2
EB2

XNOR

EA3
EB3

UG7

ET2
ENT2

EA3   AC0
AD2   AB1   AA3

**FIG 13**

NA3B3      EB2      ET2  ENT2

AA3

**FIG 14**

EA2  ET2          ENT2

FIG 15

EP 0 424 410 B1

# FIG 16

$A_{m-1}$ | $A_{m-2}$ | . . . | $A_4$ | $A_3$ | $A_2$ | $A_1$ | $A_0$

$A_{m+n}$ $A_{m+1}$ $A_m$

# FIG 17

TM1    $B_0$  $B_1$  $B_2$  $B_3$    $B_4$  $B_5$  $B_6$  $B_7$  . . .    $B_{4K-1}$   TM2

$A_0$

UGT1

$A_{-1}$  $A_{-2}$  $A_{-3}$    $A_{-4}$  $A_{-5}$  $A_{-6}$  $A_{-7}$    $A_{-4K+1}$

EP 0 424 410 B1

## FIG 18

FIG 19